(19) Europäisches Patentamt
European Patent Office
Office européen des brevets

(11) **EP 3 599 657 B1**

(12) **EUROPEAN PATENT SPECIFICATION**

(45) Date of publication and mention
of the grant of the patent:
**10.11.2021 Bulletin 2021/45**

(51) Int Cl.:
*H01M 8/04291* *(2016.01)*   *H01M 8/04119* *(2016.01)*
*H01M 8/04746* *(2016.01)*   *H01M 8/04537* *(2016.01)*
*H01M 8/0438* *(2016.01)*    *H01M 8/0432* *(2016.01)*
*H01M 8/04492* *(2016.01)*   *B60K 11/00* *(2006.01)*
*H01M 8/04029* *(2016.01)*

(21) Application number: **19181611.5**

(22) Date of filing: **21.06.2019**

(54) **FUEL CELL SYSTEM WITH LIQUID WATER AMOUNT ESTIMATING SECTION**

BRENNSTOFFZELLENSYSTEM MIT KOMPONENTE ZUR SCHÄTZUNG DER FLÜSSIGWASSERMENGE

SYSTÈME DE PILE À COMBUSTIBLE AVEC ÉLÉMENT D'ESTIMATION DE LA QUANTITÉ D'EAU LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2018 JP 2018137879**

(43) Date of publication of application:
**29.01.2020 Bulletin 2020/05**

(73) Proprietor: **TOYOTA JIDOSHA KABUSHIKI KAISHA**
**Toyota-Shi,**
**Aichi-Ken 471-8571 (JP)**

(72) Inventor: **KOMAKI, Katsuya**
**TOYOTA-SHI, AICHI-KEN, 471-8571 (JP)**

(74) Representative: **Cabinet Beau de Loménie**
**158, rue de l'Université**
**75340 Paris Cedex 07 (FR)**

(56) References cited:
**US-A1- 2002 184 901    US-A1- 2003 003 334**
**US-A1- 2009 155 651    US-A1- 2012 171 582**

**Description**

BACKGROUND

Technical Field

The present disclosure relates to a fuel cell system and a liquid water amount estimating method.

Related Art

Japanese Patent Application Laid-Open (JP-A) No. 2010-153246 discloses a fuel cell system that carries out generation of electricity by reacting fuel gas and an oxidant gas, and that is structured such that the liquid water that is discharged at the time of generating electricity is stored in a catch tank. In this JP-A No. 2010-153246, the estimated discharged water amount is derived on the basis of the integrated value of the generated current, and a drain valve is opened in a case in which it is judged, from these results of estimation, that the amount of discharged water that is stored in the catch tank is greater than or equal to a threshold value.

However, in a case in which the amount of discharged water is estimated only on the basis of the integrated value of the generated current as in JP-A No. 2010-153246, only an amount of discharged water that is the total of the water vapor and the liquid water can be estimated. Therefore, there is room for improvement from the standpoint of estimating the discharged amount of liquid water.

Additional strategies to determine the amount of liquid water discharged from a fuel cell are disclosed in US 2009/155651A1 and in US 2003/003334A1.

SUMMARY

The present invention is defined by the appended claims.

The present disclosure provides a fuel cell system and a liquid water amount estimating method that may estimate the discharged amount of liquid water among water that has been discharged.

A first aspect of the present disclosure is a fuel cell system including: a fuel cell stack at which generation of electricity is carried out by chemical reaction of hydrogen and oxygen, and from which water and exhaust are discharged; and a liquid water amount estimation section that estimates an amount of liquid water among the discharged water, based on an amount of current that is generated by the fuel cell stack, an amount of air that is supplied to the fuel cell stack, a temperature of the air, a relative humidity of the air, a temperature of exhaust that is discharged from the fuel cell stack, and a pressure of the exhaust.

In the fuel cell system of the first aspect, at the fuel cell stack, generation of electricity is carried out due to a chemical reaction between hydrogen and oxygen occurring, and water and exhaust are discharged. Here, the fuel cell system has the liquid water amount estimation section. This liquid water amount estimation section estimates the discharged liquid water amount on the based on the amount of current that is generated by the fuel cell stack, the amount of air that is supplied thereto, the temperature of the air, the relative humidity of the air, the temperature of the exhaust, and the pressure of the exhaust. In this way, information from the supply side, which is the amount and the relative humidity of the air that is supplied to the fuel cell stack, and information from the exhaust side, which is the temperature and the exhaust pressure of the exhaust that is discharged from the fuel cell stack, are added to the generated current amount of the fuel cell stack. Due thereto, the amount of liquid water among the discharged water may be estimated.

According to the first aspect of the present disclosure, the fuel cell system further includes a water storage tank that stores the liquid water that has been discharged from the fuel cell stack; a valve that is provided on a drain pipe that connects the fuel cell stack and the water storage tank; and a valve control section that controls a degree of opening of the valve, wherein, the greater the amount of liquid water estimated by the liquid water amount estimation section, the larger the valve control section makes the degree of opening of the valve, and, the smaller the amount of liquid water estimated by the liquid water amount estimation section, the smaller the valve control section makes the degree of opening of the valve.

In the fuel cell system of the first aspect, the water storage tank, which stores the liquid water that is discharged from the fuel cell stack, is provided. Further, the fuel cell stack and the water storage tank are connected by the drain pipe, and the valve is provided on the drain pipe. The degree of opening of the valve is controlled by the valve control section. The greater the liquid water amount estimated by the liquid water estimation section, the greater the valve control section makes the degree of opening of the valve. Due thereto, in a case in which the discharged liquid water amount is large, by making the degree of opening of the valve large, the sectional surface area of the flow path of the drain pipe becomes large, and the discharged liquid water being discharged into the atmosphere without being stored in the water storing tank may be suppressed. Conversely, the smaller the liquid water amount estimated by the liquid water estimation section, the smaller the valve control section makes the degree of opening of the valve. Due thereto, in a case in which the discharged liquid water amount is small, by making the degree of opening of the valve small, the sectional surface area of the flow path of the drain pipe becomes small, and gas, which is other than the liquid water, and the like entering into the water storing tank may be suppressed.

A second aspect of the present disclosure is a fuel cell system may further include a jetting section that jets the liquid water, which is stored in the water storage tank, out to a heat exchanger of a vehicle.

In the fuel cell system of the second aspect, heat exchange may be promoted by jetting discharged liquid water out to the heat exchanger of the vehicle.

A third aspect of the present disclosure, which is not part of the present invention, is a liquid water amount estimating method that is applied to a fuel cell system including a fuel cell stack at which generation of electricity is carried out by chemical reaction of hydrogen and oxygen and from which water and exhaust are discharged, the method including: estimating an amount of liquid water among the discharged water, based on an amount of current that is generated by the fuel cell stack, an amount of air that is supplied to the fuel cell stack, a temperature of the air, a relative humidity of the air, a temperature of exhaust that is discharged from the fuel cell stack, and a pressure of the exhaust.

In the liquid water amount estimating method of the third aspect, the discharged liquid water amount is estimated on the basis of the amount of current that is generated by the fuel cell stack, the amount of air that is supplied thereto, the temperature of the air, the relative humidity of the air, the temperature of the exhaust, and the pressure of the exhaust.

In this way, information from the supply side, which is the amount and the relative humidity of the air that is supplied to the fuel cell stack, and information from the exhaust side, which is the temperature and the exhaust pressure of the exhaust that is discharged from the fuel cell stack, are added to the generated current amount of the fuel cell stack. Due thereto, the amount of liquid water among the discharged water may be estimated.

As described above, in accordance with the fuel cell system of the first aspect and the method of estimating an amount of liquid water of the third aspect, the discharged amount of liquid water may be estimated.

In accordance with the fuel cell system of the first aspect, liquid water may be stored in the water storage tank effectively.

In accordance with the fuel cell system of the second aspect, the performance of the heat exchanger may be improved.

BRIEF DESCRIPTION OF THE DRAWINGS

Exemplary embodiments of the present disclosure will be described in detail based on the following figures, wherein:

Fig. 1 is a schematic drawing that schematically shows the overall structure of a fuel cell system relating to an exemplary embodiment;

Fig. 2 is a schematic drawing that corresponds to Fig. 1 and shows a first modified example of the fuel cell system relating to the exemplary embodiment;

Fig. 3 is a schematic drawing that corresponds to Fig. 1 and shows a second modified example of the fuel cell system relating to the exemplary embodiment;

Fig. 4 is a schematic drawing that corresponds to Fig. 1 and shows a third modified example of the fuel cell system relating to the exemplary embodiment;

Fig. 5 is a graph showing an example of the relationship between total pressure and the ratio of liquid water;

Fig. 6 is a schematic block diagram of the fuel cell system relating to the exemplary embodiment;

Fig. 7 is a flowchart showing an example of a method of estimating an amount of liquid water relating to the exemplary embodiment; and

Fig. 8 is a flowchart showing another example of the method of estimating an amount of liquid water.

DETAILED DESCRIPTION

(Overall Structure)

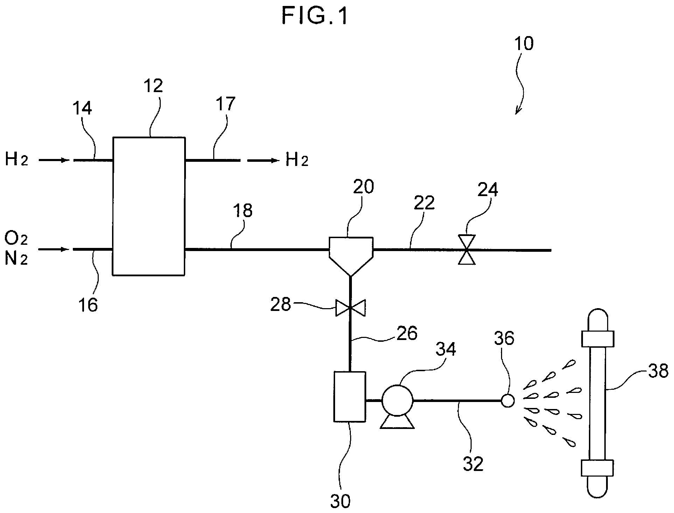

A fuel cell system 10 relating to an exemplary embodiment is described with reference to the drawings. As illustrated in Fig. 1, the fuel cell system 10 relating to the present embodiment is installed in a vehicle, and has a fuel cell stack 12.

The fuel cell stack 12 of the present embodiment is a battery that generates electricity due to hydrogen and air being supplied thereto. Concretely, the fuel cell stack 12 has plural cells, and hydrogen flows between the positive electrodes (anodes, fuel electrodes) of the cells and a separator that is at the positive electrode side, and air that contains oxygen flows between the negative electrodes (cathodes, air electrodes) of the cells and a separator that is at the negative electrode side. Then, generation of electricity is carried out by a chemical reaction between the hydrogen and the oxygen. A motor is driven due to electric power being supplied to the motor from the fuel cell stack 12.

At this time, because the fuel cell stack 12 generates electricity, there is a structure in which cooling water is made to flow within the fuel cells, and the heat that is generated at the fuel cell stack 12 is absorbed. Further, accompanying the generation of electricity by the fuel cell stack 12, exhaust, which contains oxygen and nitrogen, and discharged (generated) water, which contains liquid water and water vapor, are discharged.

A hydrogen supply pipe 14, by which hydrogen is supplied from an unillustrated hydrogen tank, is connected to the fuel cell stack 12. Further, an air supply pipe 16, by which air is supplied, is connected to the fuel cell stack 12. An unillustrated air compressor is provided at the air supply pipe 16. Further, the hydrogen gas, which is supplied from the hydrogen supply pipe 14 to the fuel cell stack 12, and the oxygen within the air, which is supplied from the air supply pipe 16 to the fuel cell stack 12, are reacted.

One end side of a first exhaust pipe 17 is connected to the fuel cell stack 12, and unreacted hydrogen gas flows through the first exhaust pipe 17. The other end portion of the first exhaust pipe 17 opens to the atmosphere, and therefore, there is a structure in which the unreacted hydrogen gas is discharged to the atmosphere. Note that the amount of unreacted hydrogen gas that is discharged is a minute amount, and does not reach a concentration needed for combustion.

One end side of a second exhaust pipe 18 is connected to the fuel cell stack 12. This second exhaust pipe 18 is an exhaust pipe from which exhaust, which is discharged oxygen and nitrogen and the like, is discharged. The other end side of the second exhaust pipe 18 is connected to a gas/liquid separator 20. Note that discharged water that contains water vapor and liquid water flows through the second exhaust pipe 18, in addition to the oxygen and nitrogen.

A third exhaust pipe 22 and a drain pipe 26 are connected to the gas/liquid separator 20. The third exhaust pipe 22 is an exhaust pipe through which gas, which has been separated by the gas/liquid separator 20, flows, and opens to the atmosphere. Therefore, the gas that flows through the third exhaust pipe 22 is discharged to the atmosphere. Further, a pressure-adjusting valve 24 is provided on the third exhaust pipe 22, and the third exhaust pipe 22 is opened and closed due to this pressure-adjusting valve 24 being operated. Therefore, there is a structure in which gas may be released to the atmosphere at an arbitrary timing.

Liquid water, which has been separated by the gas/liquid separator 20, flows through the drain pipe 26. The drain pipe 26 is connected to a water storage tank 30. Further, a drain valve 28 is provided on the drain pipe 26, and the drain pipe 26 is opened and closed by this drain valve 28 being operated.

The water storage tank 30 is a tank that stores the liquid water that has flowed through the drain pipe 26. One end side of a liquid feed pipe 32 is connected to the water storage tank 30. The other end side of the liquid feed pipe 32 is positioned in a vicinity of a radiator 38 that serves as a heat exchanger, and a jetting portion 36 is provided at this other end portion of the liquid feed pipe 32. The jetting portion 36 is structured to include a nozzle and the like, and is structured such that liquid water, which is stored in the water storage tank 30, is jetted-out through the liquid feed pipe 32 from the jetting portion 36 to the radiator 38. Further, a liquid feed pump 34 is provided on the liquid feed pipe 32. Liquid water that is within the liquid feed pipe 32 is fed to the jetting portion 36 due to the liquid feed pump 34 being operated.

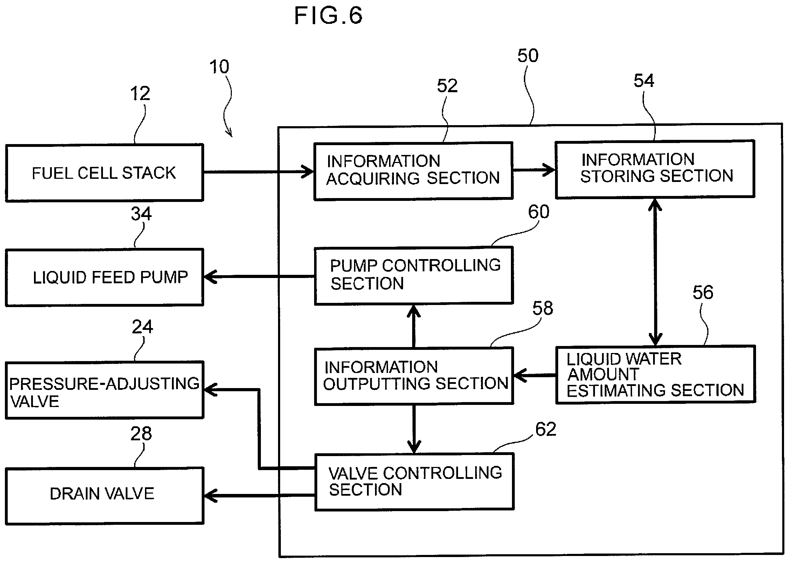

An example of the controlling section at the fuel cell system 10 relating to the present embodiment is described next. As illustrated in Fig. 6, the fuel cell system 10 has a computer 50. The computer 50 is structured to include a CPU (Central Processing Unit), a ROM (Read Only Memory) that stores programs and the like for implementing various processing routines, a RAM (Random Access Memory) that temporarily stores data, a memory that serves as a storing means, a network interface, and the like.

Functionally, the computer 50 has an information acquiring section 52, an information storing section 54, a liquid water amount estimation section 56, an information outputting section 58, a pump controlling section 60 and a valve control section 62.

The information acquiring section 52 acquires various information from the fuel cell stack 12. Concretely, the information acquiring section 52 acquires the generated current amount of the fuel cell stack 12, the amount of air that is supplied to the fuel cell stack 12, the temperature of the air that is supplied to the fuel cell stack 12, the relative humidity of this air, the temperature of the exhaust that is discharged from the fuel cell stack 12, the pressure of the exhaust that is discharged from the fuel cell stack 12, and the like. These information are measured by plural, unillustrated sensors, and the information acquiring section 52 acquires the measured values that have been measured.

The information storing section 54 stores the information acquired by the information acquiring section 52. Further, information such as formulas and the like are stored in the information storing section 54. The liquid water amount estimation section 56 estimates the discharged liquid water amount on the basis of the information acquired by the information acquiring section 52. Details of the estimating formulas that are used at this time are described later.

The information outputting section 58 outputs the liquid water amount, which has been estimated by the liquid water amount estimation section 56, to the pump controlling section 60 and the valve control section 62. Further, the liquid water amount may be outputted to a display portion such as an unillustrated display or the like that is disposed at the instrument panel of the vehicle.

The pump controlling section 60 carries out control of the liquid feed pump 34. Namely, due to the liquid feed pump 34 being operated by the pump controlling section 60, liquid water that is within the liquid feed pipe 32 is sent to the jetting portion 36, and the liquid water is jetted-out from the jetting portion 36 to the radiator 38.

The valve control section 62 carries out control of the pressure-adjusting valve 24 and the drain valve 28. Namely, due to the pressure-adjusting valve 24 being opened by the valve control section 62, the exhaust within the third exhaust pipe 22 is discharged to the atmosphere. Further, due to the drain valve 28 being opened by the valve control section 62, the liquid water that is within the drain pipe 26 is stored in the water storage tank 30. Note that the present embodiment is structured such that the degree of opening of the drain valve 28 may be adjusted by the valve control section 62 to an arbitrary degree of opening that is between fully-open and fully-closed.

(Method of Estimating Liquid Water Amount)

The method of estimating the amount of liquid water that is discharged at the fuel cell stack 12 is described next. First, the reaction formula at the fuel cell stack 12 is as follows. At this time, it is supposed that the oxygen consumption amount is 100%, and the mol ratio of the sucked-in oxygen with respect to the hydrogen consumption amount is k.

$$H_2 + \frac{1}{2} \cdot O_2 + \left(k - \frac{1}{2}\right) \cdot O_2 + 1.88k \cdot N_2 \rightarrow H_2O + \left(k - \frac{1}{2}\right) \cdot O_2 + 1.88k \cdot N_2$$

The 1.88 in the above reaction formula is a factor expressing the mol ratio within air, and is based on the fact that, within air, N2 and O2 are in a ratio of around 0.79 : 0.21.

Here, given that the water vapor molar flow rate within the exhaust is $n_{ST}$ (mol/sec), the nitrogen molar flow rate within the exhaust is $n_{N2}$ (mol/sec), the oxygen molar flow rate within the exhaust is $n_{O2}$ (mol/sec), the pressure of the exhaust is P (kPa), and the saturated vapor pressure at exhaust temperature T (°C) is $P_{ST}$ (kPa), following formula (1) is derived from Dalton's law of partial pressure.

[Formula 1]

$$n_{ST} = (n_{N2} + n_{O2}) \times \frac{P_{ST}}{P - P_{ST}} \qquad ...(1)$$

Further, from Tetens' empirical formula, the saturated vapor pressure $P_{ST}$ (kPa) is expressed as following formula (2).

[Formula 2]

$$P_{ST} = 6.1078 \times 10^{\frac{7.5 \times T}{T + 237.3}} \times 0.1 \qquad ...(2)$$

Next, given that the relative humidity of the intake air is $\phi$ (%) and the intake air temperature is $T_H$ (°C), water vapor pressure $P_H$ (kPa) of the intake air is $P_H = P_{ST} \times \phi/100$, and therefore, is expressed by following formula (3).

[Formula 3]

$$P_H = 6.1078 \times 10^{\frac{7.5 \times T_H}{T_H + 237.3}} \times 0.1 \times \frac{\phi}{100} \qquad \ldots(3)$$

Further, given that the water vapor molar flow rate in the intake air is $n_H$ (mol/sec) and the hydrogen consumption flow rate is n (mol/sec), the water vapor molar flow rate $n_H$ is expressed by following formula (4) by using the water vapor pressure $P_H$ of the intake air. Note that Pa in following formula (4) is atmospheric pressure.

[Formula 4]

$$n_H = P_H \times \left( \frac{k + 1.88k}{P_a - P_H} \right) \times n \qquad \ldots(4)$$

Here, liquid water amount $n_{Liq}$ within the exhaust is determined by discharged water amount - (saturated water vapor amount - water vapor amount within the intake air), and therefore, may be expressed by following formula (5).

[Formula 5]

$$n_{Liq} = n - 1.88k \times n \times \frac{6.1078 \times 10^{\frac{7.5 \times T}{T + 237.3}} \times 0.1}{P - 6.1078 \times 10^{\frac{7.5 \times T}{T + 237.3}} \times 0.1}$$
$$+ 2.88k \times n \times \frac{6.1078 \times 10^{\frac{7.5 \times T_H}{T_H + 237.3}} \times 0.1 \times \frac{\phi}{100}}{P_a - 6.1078 \times 10^{\frac{7.5 \times T_H}{T_H + 237.3}} \times 0.1 \times \frac{\phi}{100}} \qquad \ldots(5)$$

Note that, with regard to the mol ratio k of the sucked-in oxygen, in a case in which an ideal chemical reaction between hydrogen and oxygen takes place, k = 0.5. However, in actuality, the mol ratio k varies in accordance with various conditions. For example, the mol ratio k varies in accordance with the performance, the temperature, and the degree of deterioration of the fuel cell stack 12. Further, the mol ratio k varies also due to the required output, the environmental temperature, and the like. Therefore, for example, a method may be employed in which the characteristics of the unit cells and the fuel cell system 10 are grasped in advance, a map of the values of k is created, and the k value is read-out from the map at the time of recovering the liquid water, in accordance with the various conditions. Further, as another method, the sucked-in amounts of hydrogen and oxygen may be determined in advance, and the k value may be derived from the results of measurement thereof.

Here, in a case in which, hypothetically, the mol ratio k of the sucked-in oxygen is 1 and the relative humidity $\phi$ of the intake air is 0 (%), if k = 1 is substituted into above formula (5) and if $\phi = 0$ is substituted in, following formula (6) results.

[Formula 6]

$$n_{Liq} = n \times \left( 1 - \frac{1.88 \times 6.1078 \times 10^{\frac{7.5 \times T}{T+237.3}} \times 0.1}{P - 6.1078 \times 10^{\frac{7.5 \times T}{T+237.3}} \times 0.1} \right) \qquad ...(6)$$

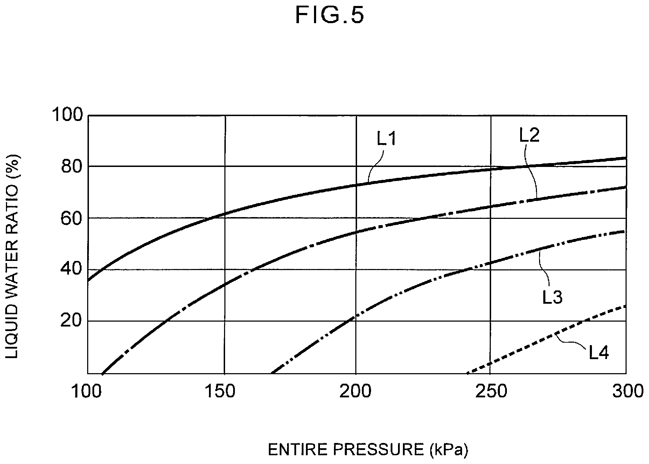

From the contents of above formula (6), the relationship between total pressure and the ratio of liquid water in a case in which k = 1 and $\phi$ = 0 is as illustrated in Fig. 5. In this Fig. 5, the relationship between the ratio of liquid water and the total pressure in a state in which the exhaust temperature is 65 (°C) is shown by solid line L1, and the relationship between the ratio of liquid water and the total pressure in a state in which the exhaust temperature is 75 (°C) is shown by one-dot chain line L2. Further, the relationship between the ratio of liquid water and the total pressure in a state in which the exhaust temperature is 85 (°C) is shown by two-dot chain line L3, and the relationship between the ratio of liquid water and the total pressure in a state in which the exhaust temperature is 95 (°C) is shown by dashed line L4. Therefore, for example, it may be understood from solid line L1 that the ratio of liquid water, at the time of a total pressure of 250 (kPa) in the case of an exhaust temperature of 65 (°C), is around 80 (%). From the above, the amount of liquid water that is discharged at the fuel cell stack 12 may be estimated.

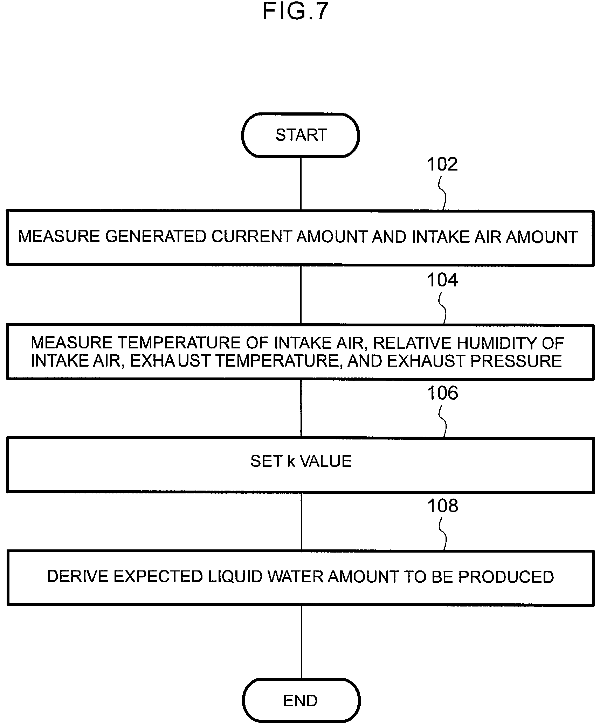

An example of the method of estimating the amount of liquid water that is discharged is described by using the flowchart of Fig. 7. First, in step 102, the generated current amount and the intake air amount (the amount of air that is supplied to the fuel cell stack 12) are measured by sensors or the like. Note that, what is called generated current amount here is proportional to the consumed amount of the hydrogen gas, and therefore, the generated current amount may be determined from the consumed amount of the hydrogen gas.

Next, in step 104, the temperature $T_H$ (°C) of the air that is supplied to the fuel cell stack 12, and the relative humidity $\phi$ (%) of the air supplied to the fuel cell stack 12, and the temperature T (°C) of the exhaust that is discharged from the fuel cell stack 12, and the pressure P (kPa) of the exhaust that is discharged from the fuel cell stack 12 are measured by sensors or the like.

In subsequent step 106, the k value is set. Here, as an example, the k value is set by reading-out the k value that corresponds to the conditions, from the map in which k values are set in advance.

Finally, in step 108, by substituting the measured values into above formulas (1) through (5), the expected amount of liquid water that is discharged is derived.

Here, the valve control section 62 that is illustrated in Fig. 6 controls the degree of opening of the drain valve 28 in accordance with the liquid water amount that is estimated by the liquid water amount estimation section 56. Concretely, in Fig. 1, the greater the estimated liquid water amount, the greater the degree of opening of the drain valve 28 is made to be, and the greater the sectional surface area of the flow path of the drain pipe 26 is made to be. Conversely, the smaller the liquid water amount that is estimated by the liquid water amount estimation section 56, the smaller the degree of opening of the drain valve 28 is made to be, and the smaller the sectional surface area of the flow path of the drain pipe 26 is made to be.

On the other hand, in a case in which the liquid water that is stored in the water storage tank 30 (see Fig. 1) is greater than or equal to a given amount, the pump controlling section 60 that is illustrated in Fig. 6 controls the liquid feed pump 34 to be operated in a case in which the need to promote heat exchange of the radiator 38 arises.

Here, on the basis of the liquid water amount that is estimated by the liquid water amount estimation section 56, and the liquid water amount that is fed due to the liquid feed pump 34 operating, the liquid water amount that is stored in the water storage tank 30 and the expected liquid water amount to be stored in the water storage tank 30 are grasped.

(Operation)

Operation of the present exemplary embodiment is described next.

At the fuel cell system 10 of the present embodiment, the amount of liquid water that is discharged is estimated on the basis of the generated current amount, the amount of air that is supplied, the temperature of the air, the relative humidity of the air, the exhaust temperature and the exhaust pressure of the fuel cell stack 12. In this way, information on the supply side, which is the amount and the temperature and the relative humidity of the air that is supplied to the fuel cell stack 12, and information on the exhaust side, which is the temperature and the exhaust pressure of the exhaust that is discharged from the fuel cell stack 12, are added to the generated current amount of the fuel cell stack 12. Due thereto, as compared with a method that estimates the discharged water amount on the basis of only the generated current amount, the amount of liquid water among the discharged water may be estimated accurately.

Further, in the present embodiment, as illustrated in Fig. 1, the water storage tank 30 that stores liquid water that has been discharged from the fuel cell stack 12 is provided. The fuel cell stack 12 and the water storage tank 30 are connected by the drain pipe 26, and the drain valve 28 is provided on the drain pipe 26. Further, the degree of opening of the drain valve 28 is controlled such that, the greater the estimated liquid water amount, the greater the sectional surface area of the flow path of the drain pipe 26 is made to be. Due thereto, by making the degree of opening of the drain valve 28 large in a case in which the amount of liquid water that is discharged is large, it is possible to suppress some of the discharged liquid water not being stored in the water storage tank 30 and being discharged into the atmosphere from the third exhaust pipe 22.

Conversely, in a case in which the amount of liquid water that is discharged is small, by making the degree of opening of the drain valve 28 small, gas such as water vapor or the like entering into the water storage tank 30 may be suppressed. Namely, if the degree of opening of the drain valve 28 is large, there is the possibility that some of the discharged gas will flow from the second exhaust pipe 18 to the water storage tank 30. In contrast, in the present embodiment, by controlling the drain valve 28 as described above, gas entering into the water storage tank 30 may be suppressed.

Moreover, in the present embodiment, because the discharged liquid water is jetted-out to the radiator 38, the heat exchange at the radiator 38 may be promoted. Namely, in a situation in which the load on the fuel cell stack 12 becomes large during traveling, there are cases in which the fuel cell stack 12 becomes high temperature. In such cases, there is the need to effectively carry out heat exchange at the radiator 38 in order to cool the fuel cell stack 12 by cooling water. By jetting liquid water out to the radiator 38 as in the present embodiment, the temperature of the radiator 38 may be lowered by the heat of evaporation of the liquid water and the like, and heat exchange may be promoted.

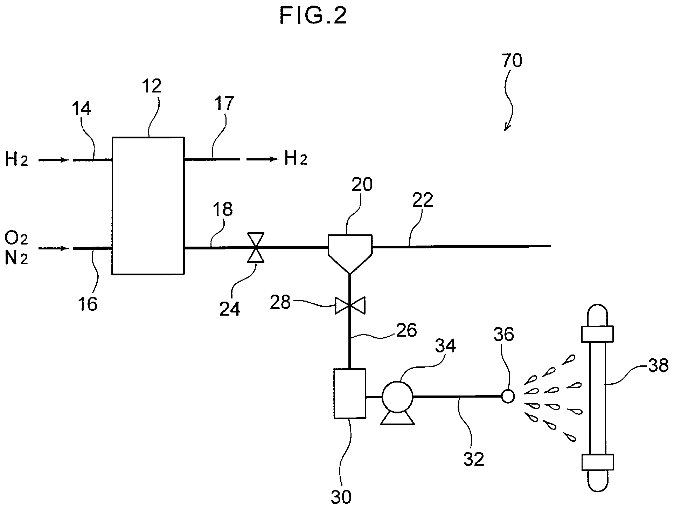

Note that the present disclosure is not limited to the structure of Fig. 1, and the structures of the modified examples that are illustrated in Figs. 2 through 4 may be employed.

(Modified Example 1)

As illustrated in Fig. 2, a fuel cell system 70 relating to the present modified example is a structure that is similar to the embodiment, except for the point that the position of the pressure-adjusting valve 24 is different.

The pressure-adjusting valve 24 of the present modified example is provided at the second exhaust pipe 18 that connects the fuel cell stack 12 and the gas/liquid separator 20. Therefore, if the pressure-adjusting valve 24 is closed, exhaust, which contains the oxygen that was unreacted at the fuel cell stack 12 and the nitrogen that passed-through the fuel cell stack 12, and discharged water that was discharged at the fuel cell stack 12, may be made to not flow to the gas/liquid separator 20.

(Second Modified Example)

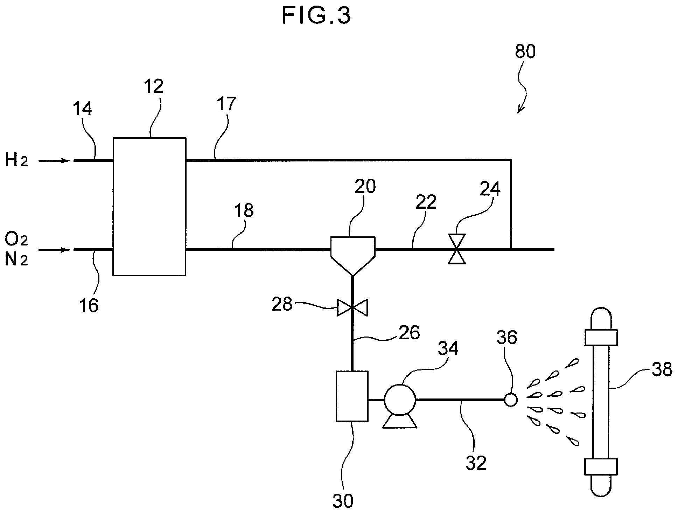

As illustrated in Fig. 3, a fuel cell system 80 relating to the present modified example is a structure that is similar to the embodiment, except for the point that the connected position of the first exhaust pipe 17 is different.

One end side of the first exhaust pipe 17 of the present modified example is connected to the fuel cell stack 12. On the other hand, the other end side of the first exhaust pipe 17 is connected to the third exhaust pipe 22. Concretely, the other end side of the first exhaust pipe 17 is connected to the third exhaust pipe 22, further downstream of the pressure-adjusting valve 24.

Therefore, the hydrogen gas that was unreacted at the fuel cell stack 12 is discharged to the atmosphere together with the exhaust that flows from the gas/liquid separator 20 to the third exhaust pipe 22.

(Third Modified Example)

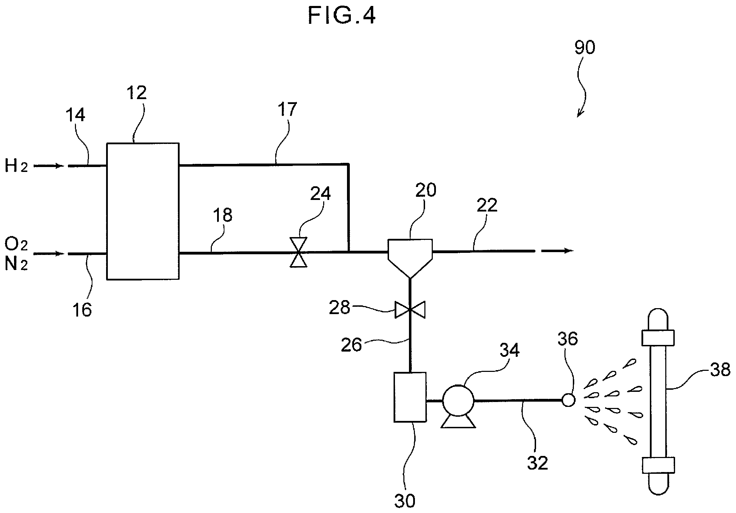

As illustrated in Fig. 4, a fuel cell system 90 relating to the present modified example is a structure that is similar to the embodiment, except for the point that the position of the pressure-adjusting valve 24 and the connected position of the first exhaust pipe 17 are different.

The pressure-adjusting valve 24 of the present modified example is provided at the second exhaust pipe 18 that connects the fuel cell stack 12 and the gas/liquid separator 20. Further, the first exhaust pipe 17 is connected to the second exhaust pipe 18. Concretely, the first exhaust pipe 17 is connected to the second exhaust pipe 18 at further downstream than the pressure-adjusting valve 24.

Therefore, the hydrogen gas that was unreacted at the fuel cell stack 12 flows to the gas/liquid separator 20 together with the exhaust that flows from the fuel cell stack 12 to the second exhaust pipe 18.

Although an embodiment and modified examples have been described above, the present disclosure can, of course, be implemented in various forms. For example, in the above-described embodiment, there is a structure in which the discharged liquid water amount is estimated during traveling of the vehicle. However, the present disclosure is not limited to this, and the discharged liquid water amount may be estimated before traveling of the vehicle. An example of such a case is described hereinafter.

A vehicle is considered having an automatic driving function that sets a route to a destination in advance, and that causes the vehicle to travel along that route. In such a vehicle, by setting the route, information such as the distance and the slopes and the like to the destination is acquired. Further, the points at which it is estimated that the load on the fuel cell stack 12 will become large are grasped from this information. On the other hand, if the discharged liquid water amount is estimated during traveling, liquid water may be jetted-out to the radiator 38 effectively at the points at which it is estimated that the load on the fuel cell stack 12 will become large.

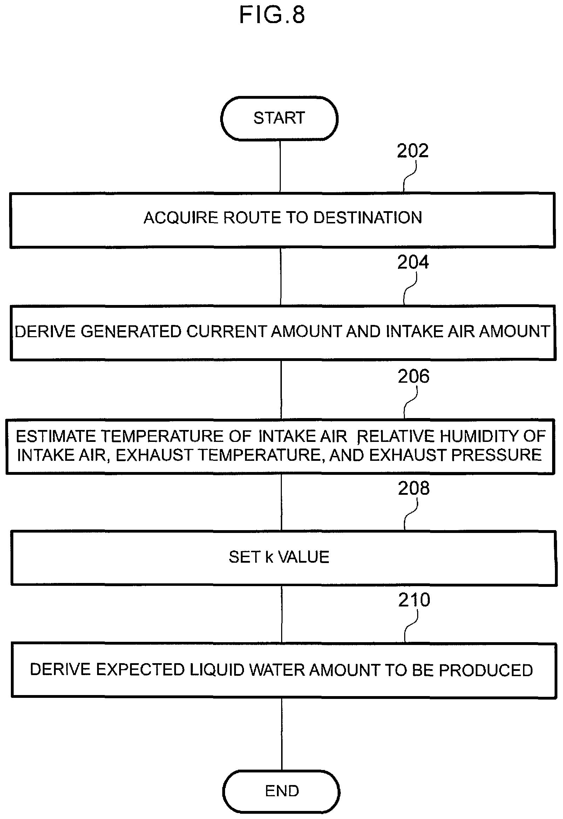

An example of the method of estimating the discharged liquid water amount before traveling of the vehicle is explained by using the flowchart of Fig. 8. First, in step 202, the destination is set by operation of a vehicle occupant. At this time, the computer 50 acquires the route to be traveled from the set destination. Here, the traveling route may be acquired in advance from map information that is stored in the vehicle in advance, or information relating to the traveling route may be acquired from an external server via the internet.

Next, in step 204, the generated current amount and the intake air amount are derived from the traveling distance and the like. Then, in step 206, the temperature and relative humidity of the intake air, and the exhaust temperature and exhaust pressure are estimated. At this time, by accessing an external server via the internet, information such as the outside air temperature and humidity and the like at arbitrary places on the traveling route may be referred to.

In subsequent step 208, the k value is set. Here, as an example, the k value is set by reading out, from a k value map that has been set in advance, the k value that corresponds to the conditions.

Finally, in step 210, by substituting the respective parameters, which were acquired in step 204 through step 208, into above formulas (1) through (5) as measured values, the expected liquid water amount that will be discharged is derived.

As described above, the liquid water amount that will be discharged during traveling may be estimated in the stage before traveling. Further, by estimating the liquid water amount that will be discharged, the drain valve 28 and the liquid feed pump 34 may be controlled so as to be able to jet-out a sufficient amount of liquid water to the radiator 38 at the points at which the load on the fuel cell stack 12 becomes large.

Further, the above-described embodiment and modified examples are structured such that the unreacted hydrogen gas is discharged into the atmosphere, but the present disclosure is not limited to this. For example, the unreacted hydrogen gas may be circulated and again supplied to the fuel cell stack 12.

Moreover, in the above-described embodiment and modified examples, description is given of structures in which the fuel cell system is installed in a vehicle. However, the present disclosure is not limited to this. Similar effects may be obtained provided that there is a fuel cell system that has a fuel cell stack at which generation of electricity is carried out by the chemical reaction of hydrogen and oxygen.

Still further, in the above-described embodiment and modified examples, description is given of a structure that has the radiator as an example of the heat exchanger. However, the present disclosure is not limited to this. For example, the present disclosure may be applied to a condenser or the like, which carries out heat exchange between outside air and the coolant that circulates through the air conditioner of a vehicle, or the like.

**Claims**

1. A fuel cell system comprising:

   a fuel cell stack (12) at which generation of electricity is carried out by chemical reaction of hydrogen and oxygen, and from which water and exhaust are discharged;
   **characterized in that** it comprises a liquid water amount estimation section (56) that estimates an amount of liquid water among the discharged water, based on an amount of current that is generated by the fuel cell stack (12), an amount of air that is supplied to the fuel cell stack (12), a temperature of the air, a relative humidity of the air, a temperature of exhaust that is discharged from the fuel cell stack (12), and a pressure of the exhaust, a water storage tank (30) that stores the liquid water that has been discharged from the fuel cell stack (12);
   a valve (28) that is provided on a drain pipe (26) that connects the fuel cell stack (12) and the water storage tank (30); and
   a valve control section (62) that controls a degree of opening of the valve (28),
   wherein, the greater the amount of liquid water estimated by the liquid water amount estimation section (56), the larger the valve control section (62) makes the degree of opening of the valve (28), and, the smaller the amount of liquid water estimated by the liquid water amount estimation section (56), the smaller the valve control section (56) makes the degree of opening of the valve (28).

**2.** The fuel cell system of claim 1, further comprising a jetting section (36) that jets the liquid water, which is stored in the water storage tank (30), out to a heat exchanger of a vehicle.

**Patentansprüche**

**1.** Brennstoffzellensystem, umfassend:

einen Brennstoffzellenstapel (12), in dem eine Erzeugung von Elektrizität durch eine chemische Reaktion von Wasserstoff und Sauerstoff erfolgt und aus dem Wasser und Abgas abgeführt werden, **dadurch gekennzeichnet, dass** es eine Flüssigwassermengen-Schätzsektion (56) umfasst, die eine Menge an Flüssigwasser von dem abgeführten Wasser basierend auf einer Strommenge, die von dem Brennstoffzellenstapel (12) erzeugt wird, einer Menge an Luft, die dem Brennstoffzellenstapel (12) zugeführt wird, einer Temperatur der Luft, einer relativen Feuchtigkeit der Luft, einer Temperatur des Abgases, das aus dem Brennstoffzellenstapel (12) abgeführt wird, und einem Druck des Abgases schätzt, einen Wasserspeichertank (30), der das Flüssigwasser speichert, das aus dem Brennstoffzellenstapel (12) abgeführt wurde, ein Ventil (28), das an einem Abflussrohr (26) vorgesehen ist, das den Brennstoffzellenstapel (12) und den Wasserspeichertank (30) verbindet, und eine Ventilsteuersektion (62), die einen Öffnungsgrad des Ventils (28) steuert, wobei die Ventilsteuersektion (62) den Öffnungsgrad des Ventils (28) umso größer macht, je größer die durch die Flüssigwassermengen-Schätzsektion (56) geschätzte Menge an Flüssigwasser ist, und die Ventilsteuersektion (62) den Öffnungsgrad des Ventils (28) umso kleiner macht, je kleiner die durch die Flüssigwassermengen-Schätzsektion (56) geschätzte Menge an Flüssigwasser ist.

**2.** Brennstoffzellensystem nach Anspruch 1, ferner umfassend eine Ausstoßsektion (36), die das Flüssigwasser, das in dem Wasserspeichertank (30) gespeichert ist, zu einem Wärmetauscher eines Fahrzeugs ausstößt.

**Revendications**

**1.** Système de pile à combustible comprenant :

un bloc de pile à combustible (12) au niveau duquel une génération d'électricité est réalisée par réaction chimique d'hydrogène et d'oxygène, et duquel de l'eau et un échappement sont refoulés ; **caractérisé en ce qu'**il comprend une section d'estimation de quantité d'eau liquide (56) qui estime une quantité d'eau liquide parmi l'eau refoulée, sur la base d'une quantité de courant qui est générée par le bloc de pile à combustible (12), d'une quantité d'air qui est délivrée au bloc de pile à combustible (12), d'une température de l'air, d'une hygrométrie de l'air, d'une témperature d'échappement qui est refoulé du bloc de pile à combustible (12), et d'une pression de l'échappement, une cuve de stockage d'eau (30) qui stocke l'eau liquide qui a été refoulée du bloc de pile à combustible (12) ; une soupape (28) qui est prévue sur un tuyau d'évacuation (26) qui relie le bloc de pile à combustible (12) et la cuve de stockage d'eau (30) ; et une section de commande de soupape (62) qui commande un degré d'ouverture de la soupape (28), dans lequel, plus la quantité d'eau liquide estimée par la section d'estimation de quantité d'eau liquide (56) est grande, plus la section de commande de soupape (62) rend grand le degré d'ouverture de la soupape (28), et, plus la quantité d'eau liquide estimée par la section d'estimation de quantité d'eau liquide (56) est faible, plus la section de commande de soupape (56) rend faible le degré d'ouverture de la soupape (28).

**2.** Système de pile à combustible selon la revendication 1, comprenant en outre une section d'éjection (36) qui éjecte l'eau liquide, qui est stockée dans la cuve de stockage d'eau (30), jusqu'à un échangeur de chaleur d'un véhicule.

# FIG.1

FIG.2

# FIG.3

FIG.4

EP 3 599 657 B1

## FIG.5

EP 3 599 657 B1

FIG.6

# FIG.7

```
                    ┌─────────────┐
                    │    START    │
                    └─────────────┘
                           │              102
                           │               ⌇
  ┌────────────────────────────────────────────────────────┐
  │  MEASURE GENERATED CURRENT AMOUNT AND INTAKE AIR AMOUNT │
  └────────────────────────────────────────────────────────┘
                           │              104
                           │               ⌇
  ┌────────────────────────────────────────────────────────┐
  │  MEASURE TEMPERATURE OF INTAKE AIR, RELATIVE HUMIDITY OF│
  │  INTAKE AIR, EXHAUST TEMPERATURE, AND EXHAUST PRESSURE  │
  └────────────────────────────────────────────────────────┘
                           │              106
                           │               ⌇
  ┌────────────────────────────────────────────────────────┐
  │                     SET k VALUE                        │
  └────────────────────────────────────────────────────────┘
                           │              108
                           │               ⌇
  ┌────────────────────────────────────────────────────────┐
  │  DERIVE EXPECTED LIQUID WATER AMOUNT TO BE PRODUCED     │
  └────────────────────────────────────────────────────────┘
                           │
                    ┌─────────────┐
                    │     END     │
                    └─────────────┘
```

# FIG.8

```
          ┌──────────┐
          │  START   │
          └──────────┘
               │          202
               │         ⌇
 ┌─────────────────────────────────────────┐
 │       ACQUIRE ROUTE TO DESTINATION        │
 └─────────────────────────────────────────┘
               │          204
               │         ⌇
 ┌─────────────────────────────────────────┐
 │ DERIVE GENERATED CURRENT AMOUNT AND INTAKE AIR AMOUNT │
 └─────────────────────────────────────────┘
               │          206
               │         ⌇
 ┌─────────────────────────────────────────┐
 │ ESTIMATE TEMPERATURE OF INTAKE AIR  RELATIVE HUMIDITY OF │
 │ INTAKE AIR, EXHAUST TEMPERATURE, AND EXHAUST PRESSURE │
 └─────────────────────────────────────────┘
               │          208
               │         ⌇
 ┌─────────────────────────────────────────┐
 │              SET k VALUE                 │
 └─────────────────────────────────────────┘
               │          210
               │         ⌇
 ┌─────────────────────────────────────────┐
 │ DERIVE EXPECTED LIQUID WATER AMOUNT TO BE PRODUCED │
 └─────────────────────────────────────────┘
               │
          ┌──────────┐
          │   END    │
          └──────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010153246 A
- US 2009155651 A1
- US 2003003334 A1